# FASCICULE DE BREVET EUROPEEN

(11) **EP 2 458 259 B1**
(45) Date de publication et mention de la délivrance du brevet: **22.05.2013**
(21) Numéro de dépôt: 11186557.2
(22) Date de dépôt: 25.10.2011
(51) Int. Cl.: F16N 11/08, F16N 11/10

(54) **Graisseur autonome pourvu d'une signalisation optique**
Autonome Schmiervorrichtung, die mit einer optischen Anzeige versehen ist
Standalone greaser provided with optical signalling

(30) Priorité: 26.10.2010 FR 1004208
(43) Date de publication de la demande: 30.05.2012
(73) Titulaire: NTN-SNR Roulements, 74000 Annecy (FR)
(72) Inventeur: Guillaume, Sébastien, 74540 GRUFFY (FR); Lenon, Hervé, 74540 GRUFFY (FR); Mermoud, Gérard, 74330 LA BALME DE SILLINGY (FR); Oddoux, Christophe, 74940 ANNECY LE VIEUX (FR)
(74) Mandataire: Novagraaf Technologies

(56) Documents cités:
- EP-A2- 0 616 921
- FR-A3- 2 697 073
- US-A- 5 404 966

## Description

### DOMAINE TECHNIQUE DE L'INVENTION

L'invention est relative à un graisseur, c'est-à-dire un dispositif de graissage d'un organe de machine tel par exemple qu'un palier à roulement ou un palier lisse, et plus particulièrement à un graisseur autonome, pourvu d'un actionneur électromécanique permettant d'alimenter en lubrifiant l'organe de machine considéré, soit à partir d'un plan de graissage mémorisé localement, soit à partir d'une commande à distance, donc sans intervention manuelle.

### ETAT DE LA TECHNIQUE ANTERIEURE

De tels graisseurs sont couramment disposés dans les ateliers de production ou les salles de machines partout où des organes de machines doivent être graissés, souvent dans des endroits peu accessibles. Ces graisseurs sont pilotés par des programmes de commande embarqués ou par des télécommandes à distance, filaires ou non. Ils sont généralement pourvus d'un système lumineux de signalisation de leur état, émettant par exemple des flashs lumineux ou des signaux continus, caractéristiques de l'état du graisseur (par exemple : fonctionnement correct, défaut, fin de fonctionnement).

Le brevet FR 2 697 073 décrit un système de distributeur de graisse comportant deux diodes électroluminescentes (LED) pour indiquer l'épuisement du sachet où est disposé la graisse et le fonctionnement normal de graisse.

Il s'avère que les dispositifs de signalisation existants ne sont pas nécessairement visibles sur un grand champ de vision, ce qui est d'autant plus pénalisant que le graisseur peut être disposé en hauteur ou à distance des chemins d'accès des personnels de service.

### EXPOSE DE L'INVENTION

L'invention vise à remédier aux inconvénients de l'état de la technique et notamment à réaliser de manière simple et fiable un graisseur pourvu d'un dispositif de signalisation visuelle amélioré.

A cet effet, l'invention a pour objet un graisseur comportant :
- un récipient à volume variable pour contenir un lubrifiant, le récipient étant pourvu d'au moins un orifice d'évacuation du lubrifiant ;
- un actionneur, notamment électromécanique ou électrochimique, pour contracter le volume du récipient ;
- un circuit électrique de commande de l'actionneur électromécanique ;
- un circuit électrique de signalisation de l'état du graisseur, comportant une source lumineuse, pour émettre au moins un signal lumineux d'alarme,
- un couvercle fixé de façon amovible au récipient de façon à constituer un logement pour le circuit électrique de signalisation, le couvercle définissant un axe géométrique de référence du graisseur, et
- un diffuseur de lumière pour guider la lumière émanant de la source lumineuse vers une pluralité de sorties de lumières réparties sur le pourtour du couvercle de manière qu'au moins une des sorties de lumière soit visible quelle que soit la position d'un observateur tourné vers le graisseur et situé sur un cercle d'observation centré sur l'axe de référence du graisseur.

En pratique, le couvercle permet d'accéder à un ou plusieurs éléments du graisseur, et notamment aux circuits électriques de signalisation ou de commande, à l'actionneur électromécanique, à une source d'énergie électrochimique autonome telle qu'une pile ou un accumulateur électrique, et/ou au récipient contenant le lubrifiant.

Le nombre de sorties de lumière peut être quelconque, pour autant qu'il soit compatible avec une détection de la lumière à 360° autour de l'axe de référence. En pratique, le nombre de sorties de lumière sera supérieur à trois.

L'axe de référence du couvercle, qui définit avant tout dans quelles directions doit rayonner la lumière émise par la source lumineuse, pourra également être le cas échéant un axe de montage du couvercle par rapport au récipient. Il pourra également constituer un axe géométrique de symétrie du couvercle, ce dernier pouvant avoir une forme générale cylindrique.

Préférentiellement, le diffuseur de lumière comporte une entrée de lumière disposée en regard de la source lumineuse, et au moins un guide de lumière pour distribuer la lumière vers les sorties de lumière.

Le guide de lumière impose à la lumière une trajectoire dont une partie peut être en arc de cercle autour de l'axe de référence, par exemple pour guider la lumière vers les différentes sorties de lumière à la périphérie du couvercle.

La trajectoire de la lumière dans le guide de lumière peut également être au moins partiellement radiale par rapport à l'axe de référence.

Selon un mode de réalisation, le couvercle est vissé par rapport au récipient dans l'axe de référence.

Le diffuseur peut être logé à l'intérieur du couvercle, le couvercle étant transparent au moins au niveau des sorties de lumière. Le couvercle protège alors le diffuseur des poussières et autre pollutions extérieures.

Suivant un mode de réalisation, le circuit électrique de commande comporte une plaque de circuit imprimé de commande, le circuit électrique de signalisation comportant une plaque de circuit imprimé de signalisation qui est distincte de la plaque de circuit imprimé de commande et est reliée à la plaque de circuit imprimé de commande par au moins une interface de connexion électrique comportant un connecteur électrique relié directement au circuit électrique de signalisation et un connecteur électrique correspondant relié directement au circuit électrique de commande.

On peut alors prévoir que l'un au moins des connecteurs électriques comporte une piste de contact en arc de cercle autour de l'axe de référence, ce qui permet de fixer le circuit électrique de signalisation par rapport au circuit électrique de commande par un mouvement de rotation autour de l'axe de référence, et d'obtenir une bonne connexion même en cas de positionnement imprécis entre les deux circuits. Ceci peut notamment être utile lorsque le circuit électrique de signalisation est intégré au couvercle et que celui-ci est vissé sur l'actionneur.

Préférentiellement, l'un au moins des connecteurs est élastiquement déformable.

Suivant un mode de réalisation, le circuit électrique de signalisation est fixé au couvercle. Alternativement, le circuit électrique de signalisation peut être monté sur un plateau logé dans le couvercle et indexé en rotation par rapport au diffuseur de lumière.

Suivant un autre mode de réalisation, le circuit électrique de signalisation est solidaire du récipient ou de l'actionneur. Le circuit électrique de commande et le circuit électrique de signalisation peuvent alors être disposés sur une plaque de circuit imprimé commune, solidaire du récipient ou de l'actionneur.

On peut également prévoir une source lumineuse centrée sur l'axe de référence, le diffuseur étant solidaire du couvercle et présentant une entrée de lumière disposée en regard de la source lumineuse. Alternativement, la source lumineuse peut décalée par rapport à l'axe de référence, le diffuseur étant, par rapport au couvercle, fixe en translation axiale et libre en rotation autour de l'axe de référence, le diffuseur étant pourvu d'un relief d'indexation angulaire pour positionner le diffuseur par rapport à la source lumineuse.

Suivant un autre mode de réalisation, le diffuseur est solidaire du couvercle.

Le graisseur peut comporter en outre un organe de fixation du couvercle au récipient, sans rotation du couvercle par rapport au récipient autour de l'axe géométrique de référence. Cet organe de fixation peut comporter une bague intermédiaire de fixation, présentant un premier filetage intermédiaire coopérant avec un filetage du couvercle et un deuxième filetage intermédiaire coopérant avec un filetage de l'actionneur électromécanique, le premier filetage intermédiaire et le deuxième filetage intermédiaire ayant des pas inversés.

Suivant une autre variante, l'organe de fixation comporte :
- une bague de fixation pourvue d'une interface de fixation à baïonnette ou à vis pour fixer la bague à l'actionneur électromécanique par rotation de la bague par rapport à l'actionneur électromécanique autour de l'axe de référence, et d'un épaulement de pincement du couvercle sur l'actionneur électromécanique, et
- un relief d'indexation angulaire du couvercle par rapport à l'actionneur électromécanique.

Suivant encore une autre variante, l'organe de fixation comporte un levier à genouillère.

Suivant un mode de réalisation, le diffuseur peut être pourvu d'un relief d'indexation angulaire par rapport au récipient, d'une interface de fixation par rapport au récipient, et d'une interface de fixation par rapport au couvercle. On peut également prévoir que le diffuseur de lumière soit pourvu d'un relief d'indexation angulaire par rapport à l'actionneur électromécanique, d'une interface de fixation par rapport à l'actionneur électromécanique, et d'une interface de fixation par rapport au couvercle

Suivant un mode de réalisation, le circuit électrique de signalisation est alimenté électriquement par une source électrochimique autonome, solidaire du couvercle et distincte de la source électrique du circuit de commande de l'actionneur.

### BREVE DESCRIPTION DES FIGURES

D'autres caractéristiques, détails et avantages de l'invention ressortiront à la lecture de la description qui suit, en référence aux figures annexées, qui illustrent :
- la figure 1 une vue schématique en coupe d'un graisseur selon un premier mode de réalisation de l'invention;
- la figure 2, une vue schématique selon les ligne II-II de la figure 1 ;
- la figure 3, une vue schématique en coupe d'un graisseur selon un deuxième mode de réalisation de l'invention,
- la figure 4, une vue de côté d'un couvercle du graisseur de la figure 3,
- la figure 5, une vue schématique en coupe d'un graisseur selon un troisième mode de réalisation de l'invention,
- la figure 6, une vue schématique en coupe d'un graisseur selon un quatrième mode de réalisation de l'invention,
- la figure 7, une vue schématique selon le plan VII-VII de la figure 6,
- la figure 8, une vue schématique en coupe d'un graisseur selon un cinquième mode de réalisation de l'invention,
- la figure 9, une vue schématique en coupe d'un graisseur selon un sixième mode de réalisation de l'invention,
- la figure 10, une vue schématique en coupe d'un graisseur selon un septième mode de réalisation de l'invention,
- la figure 11, une vue schématique en perspective d'un diffuseur de lumière du graisseur de la figure 10,
- la figure 12, une vue schématique en coupe d'un graisseur selon un huitième mode de réalisation de l'invention,
- la figure 13, une vue schématique en coupe d'un graisseur selon un neuvième mode de réalisation de l'invention,
- la figure 14, une vue de côté du graisseur de la figure 13,
- la figure 15, une vue schématique en coupe d'un graisseur selon un dixième mode de réalisation de l'invention,
- la figure 16, une vue schématique en coupe d'un graisseur selon un onzième mode de réalisation de l'invention,
- la figure 17, une vue schématique en coupe d'un graisseur selon un douzième mode de réalisation de l'invention dans une position en cours de montage,
- la figure 18, une vue schématique du graisseur de la figure 17, en fin de montage,
- la figure 19, une vue schématique en coupe d'un graisseur selon un treizième mode de réalisation de l'invention,
- la figure 20, une vue schématique de dessus du graisseur de la figure 19,
- la figure 21, une vue schématique du dessus d'un graisseur selon un quatorzième mode de réalisation de l'invention,
- la figure 22, une vue schématique en coupe d'un graisseur selon un quinzième mode de réalisation de l'invention,
- la figure 23, une vue schématique en perspective d'un diffuseur de lumière du graisseur de la figure 22,
- la figure 24, une vue schématique en coupe d'un graisseur selon un seizième mode de réalisation de l'invention,
- la figure 25, une vue schématique en coupe d'un graisseur selon un dix-septième mode de réalisation de l'invention.

Pour plus de clarté, les éléments identiques ou similaires des différents modes de réalisation seront repérés par des signes de référence identiques sur l'ensemble des figures. Leur description ne sera pas systématiquement répétée d'un mode de réalisation à l'autre.

### DESCRIPTION DETAILLEE D'UN MODE DE REALISATION

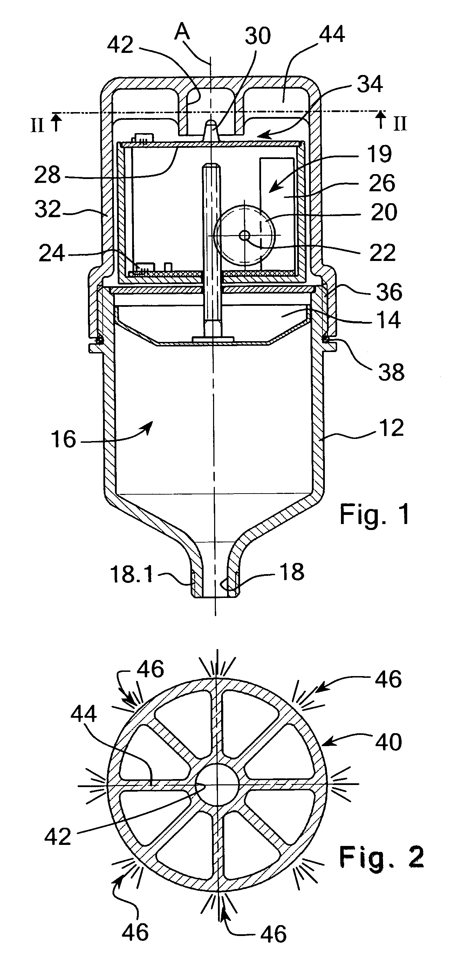

Sur la figure 1 est représenté un graisseur 10 selon un premier mode de réalisation de l'invention, comportant un carter cylindrique 12 dans lequel coulisse un piston 14 pour former récipient à volume variable 16 destiné à contenir un lubrifiant, le fond du récipient étant pourvu d'au moins un orifice 18 d'évacuation du lubrifiant. Un actionneur électromécanique 19 constitué d'un moteur électrique 20 lié à une vis sans fin 22 est fixé sur une paroi supérieure du carter et permet d'entraîner le piston 14 pour contracter le volume 16 du récipient et délivrer le lubrifiant. Ce type de graisseur est utilisé notamment pour graisser des pièces mobiles de machines telles que des paliers lisses ou à roulement. Le graisseur est fixé à un carter de machine par tout moyen de fixation adapté, par exemple par un filetage extérieur 18.1 à l'extrémité de l'orifice d'évacuation 18.

Le moteur électrique est commandé par un circuit électrique de commande 24 matérialisé par une plaque de circuit intégré et alimenté par une source électrique 26, de préférence une source électrique embarquée, par exemple une source électrochimique telle qu'une pile ou un accumulateur rechargeable.

Le circuit électrique de commande 24 est relié à un circuit électrique de signalisation 28 comportant une source lumineuse 30, en pratique une diode électroluminescente.

Le circuit électrique de signalisation incluant la source lumineuse est matérialisé par une plaque de circuit imprimé qui supporte la diode électroluminescente 30 et qui, dans cet exemple de réalisation, est distincte de la plaque de circuit imprimé du circuit de commande 24.

Le circuit électrique de signalisation 28 est logé dans un couvercle 32 de forme générale cylindrique, le volume intérieur 34 défini par le couvercle servant également, dans ce mode de réalisation, de logement pour le circuit électrique de commande 24, la source électrique embarquée 26 et le moteur électrique 22. Le couvercle est fixé de façon amovible sur le carter 12 de façon à permettre un accès au circuit électrique de signalisation 28, et le cas échéant au circuit électrique de commande 24, à l'actionneur 19 et/ou à la source d'énergie électrique embarquée 26. Plus précisément et dans cet exemple de réalisation, le couvercle 32 est vissé sur un filetage périphérique 36 du carter 12, avec interposition d'un joint d'étanchéité 38.

Le couvercle est inscrit dans une enveloppe géométrique cylindrique d'axe A, cet axe constituant pour la suite de l'exposé un axe de référence du graisseur.

Dans cet exemple de réalisation, le couvercle 32 est réalisé en plastique transparent. La diode électroluminescente 30 constituant la source lumineuse est centrée sur l'axe de référence A. Le couvercle transparent 32 intègre un diffuseur de lumière 40 pour diffuser la lumière émanant de la source lumineuse vers une sur le pourtour du couvercle. Ce diffuseur de lumière 40 comporte une entrée de lumière 42 disposée directement en regard de la source lumineuse 30, et des nervures constituant des guides de lumière radiaux 44, au nombre de huit dans cet exemple et visibles notamment sur la figure 2, pour guider la lumière vers des sorties de lumières 46 situées à l'extrémité de chaque guide radial 44 de manière qu'au moins une des sorties de lumière soit visible quelle que soit la position d'un observateur tourné vers le graisseur et situé sur un cercle d'observation centré sur l'axe de référence A du graisseur.

Dans la mesure où la diode électroluminescente 30 est centrée sur l'axe de référence A, il n'est pas nécessaire d'indexer le positionnement du diffuseur de lumière 40 par rapport à la diode électroluminescente 30 lors des ouvertures et fermeture du couvercle 32. Cette disposition est donc parfaitement adaptée lorsque rien n'entrave un positionnement central de la source électroluminescente.

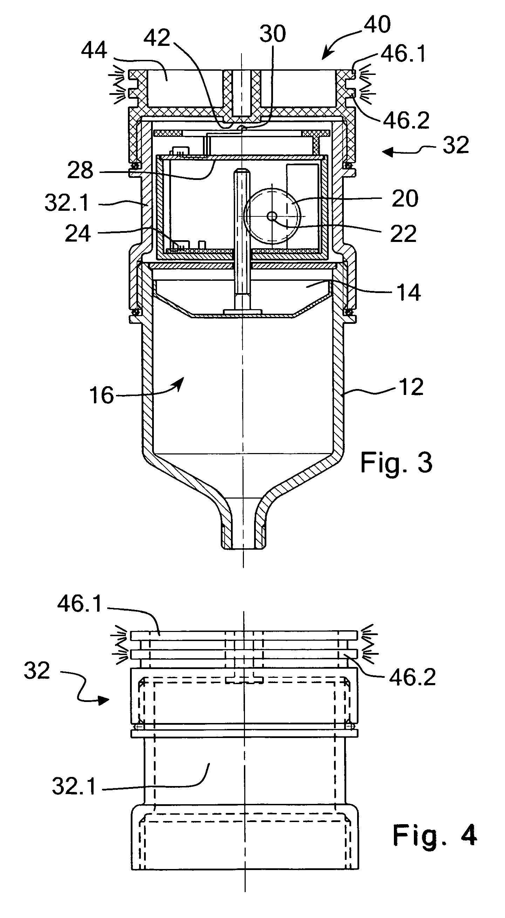

Une variante de forme du boîtier est illustrée sur les figures 3 et 4, et présente un couvercle 32 comportant une partie inférieure opaque 32.1 vissée sur le carter 12 et une partie supérieure transparente constituant le diffuseur de lumière 40 qui présente sur sa paroi externe deux anneaux périphériques 46.1, 46.2, constituant chacune une infinité de sorties de lumière diffusant la lumière uniformément sur le pourtour du couvercle.

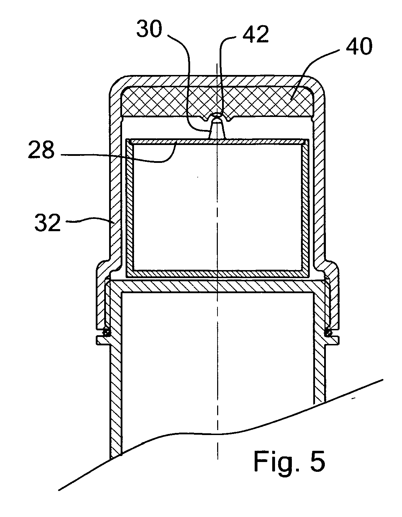

Selon une autre variante illustrée sur la figure 5, le diffuseur de lumière 32 est une pièce rapportée sur ou dans le couvercle 32, par exemple emboîtée dans le fond du couvercle 32, ce qui permet le cas échéant de choisir des matériaux différents pour le diffuseur de lumière 40 d'une part, dont la fonction est uniquement optique, et pour le couvercle 32 d'autre part, qui doit également présenter des caractéristiques mécaniques de rigidité et de résistance au chocs.

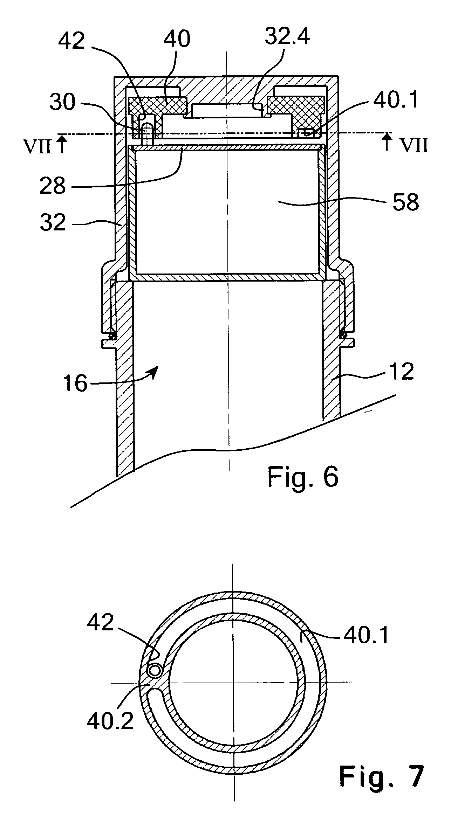

Selon une autre variante illustrée sur les figures 6 et 7, le diffuseur de lumière 40 est encliqueté sur un plot central 32.4 formé sur le fond du couvercle 32, mais préserve un degré de liberté de rotation, avec un frottement important, autour de l'axe de référence A. Ce mode de réalisation se distingue par ailleurs des précédents par le fait que la source lumineuse 30, montée sur la plaque de circuit imprimé du circuit électrique de signalisation 28, et solidaire du carter 12 du graisseur, n'est pas centrée sur l'axe de référence A du couvercle. Il est alors nécessaire de prévoir des moyens d'indexation du positionnement de l'entrée de lumière 42 du diffuseur de lumière 40 par rapport à la source lumineuse 30, lors du montage du couvercle 32 sur le carter 12. En l'occurrence, le diffuseur de lumière 40 présente une gorge en arc de cercle 40.1, cet arc couvrant préférentiellement un angle de plus de 180° mais strictement inférieur à 360° de manière à définir une paroi 40.2 orientée radialement et formant butée et un logement en creux constituant l'entrée de lumière 42, directement adjacent à la paroi 40.2. Selon une variante non représentée, il est possible de prévoir que lagorge 40.1 présente une profondeur croissante depuis l'une de ses extrémités vers l'autre de manière à constituer une rampe.

Le couvercle 32 est fixé au carter 12 par l'intermédiaire d'une vissage, sans indexation angulaire.

Lors du montage du couvercle 32 sur le carter 12, il suffit de positionner le couvercle 32 sur le carter 12 en engageant la diode électroluminescente 30 dans la gorge 40.1 et en centrant le couvercle sur l'axe de référence A, puis de tourner le couvercle 32 autour de l'axe de référence A jusqu'à ce que la diode 30 rencontre la paroi radiale 40.2 formant butée d'indexation. On est ainsi assuré d'un bon positionnement de la diode électroluminescente 30 par rapport à l'entrée de lumière 42. On peut alors visser la bague de fixation 50 sur le carter 12, de manière à pincer le couvercle 32. Si par mégarde on tente de tourner le couvercle 32 alors que la diode électroluminescente 30 est déjà positionnée en butée contre la paroi d'indexation 40.2, le couple exercé sur le diffuseur de lumière 40 dépasse le couple de frottement statique entre le diffuseur de lumière 40 et le plot central 32.4 du couvercle 32 et provoque la rotation du diffuseur de lumière 40 par rapport au couvercle 32 autour de l'axe de référence A, de sorte que la diode 30 ne se trouve pas endommagée.

Suivant une variante non représentée, on utilise, pour réaliser l'indexation angulaire, une butée mécanique solidaire du circuit imprimé de signalisation plutôt que la diode électroluminescente, qui reste un élément potentiellement fragile.

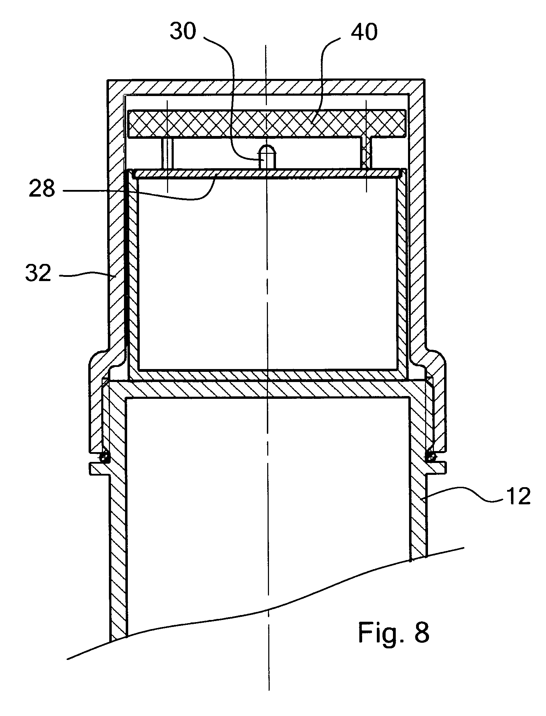

Sur la figure 8 est illustré un autre mode de réalisation de l'invention, qui se distingue des précédents notamment par le fait que le diffuseur de lumière 40 est solidaire de la plaque de circuit imprimé de signalisation 28, de sorte que son positionnement par rapport à la diode électroluminescente 30 est assuré lors d'une étape de pré-montage, précédant le montage du couvercle 32 sur le carter 12. La diode électroluminescente 30 peut être centrée ou non.

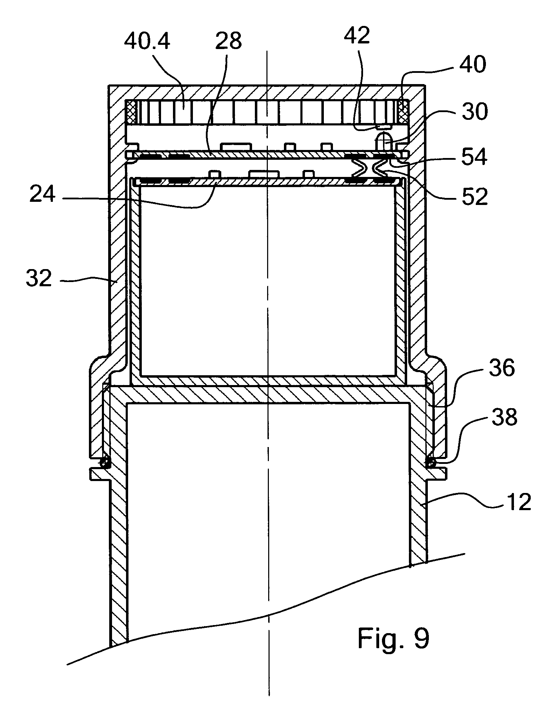

Suivant un autre mode de réalisation, illustré sur la figure 9, on intègre une source lumineuse 30 au couvercle transparent 32. Plus spécifiquement, le circuit imprimé de signalisation 28, intégrant une diode électroluminescente 30 décalée par rapport à l'axe de référence A, est intégré au couvercle 32.

Un diffuseur de lumière annulaire 40 est logé dans le fond du couvercle 32. Ce diffuseur de lumière 40 comporte une entrée de lumière 42 disposée directement en regard de la source de lumière 30, et une multitude de facettes 40.4 distribuées sur la périphérie intérieure de l'anneau et orientées de manière à constituer des miroirs renvoyant la lumière radialement vers l'extérieur. Le positionnement de l'entrée de lumière 42 du diffuseur de lumière 40 par rapport à la source lumineuse 30 est déterminé lors d'une étape de prémontage du diffuseur de lumière 40 puis du circuit imprimé 28 portant la diode électroluminescente 30 dans le couvercle 32. On peut à cet effet prévoir une indexation angulaire du diffuseur de lumière 40 et de la plaque de circuit imprimé 28 directement l'un par rapport à l'autre, ou indirectement par rapport au couvercle 32.

Le couvercle 32 est monté sur le carter 12 par vissage, de sorte que le positionnement angulaire du couvercle 32 par rapport au carter 12 n'est pas défini avec certitude. On prévoit donc une lame de contact 52 élastiquement déformable glissant sur une piste annulaire de contact 54 pour relier électriquement le circuit imprimé de signalisation 28 au circuit électrique de commande 24 et à l'alimentation électrique.

Suivant une variante non représentée, il est également envisageable de transmettre l'énergie électrique par induction, donc sans contact entre le circuit électrique de signalisation et le circuit électrique de commande.

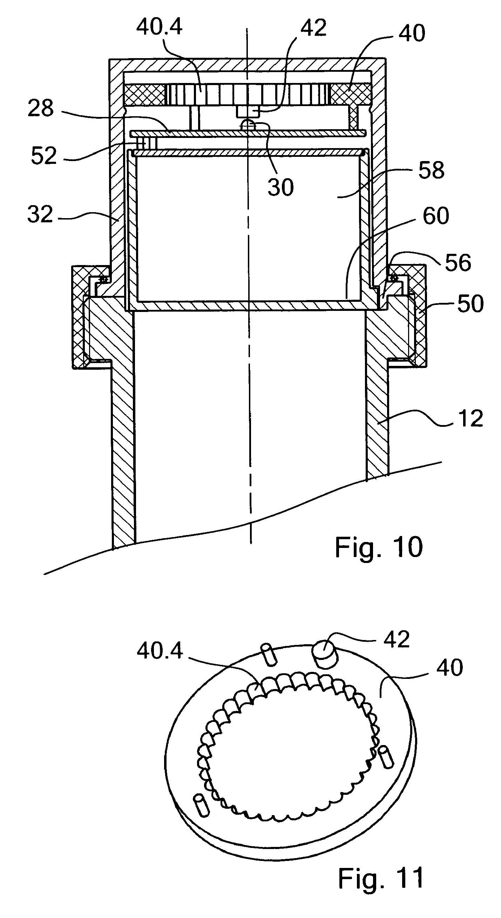

Suivant un autre mode de réalisation illustré sur les figures 10 et 11, le diffuseur de lumière 40 et circuit électrique de signalisation 28 sont fixés au couvercle. Comme dans le mode de réalisation précédent, ce diffuseur de lumière 40 de forme annulaire comporte une entrée de lumière 42 disposée directement en regard de la source de lumière 30, et une multitude de facettes 40.4 distribuées sur la périphérie intérieure de l'anneau et orientées de manière à constituer des miroirs renvoyant la lumière radialement vers l'extérieur. Le positionnement de l'entrée 42 de lumière du diffuseur de lumière par rapport à la source lumineuse 30 est déterminé lors d'une étape de prémontage du diffuseur de lumière 40 puis du circuit imprimé 28 portant la diode électroluminescente 30 dans le couvercle 32.

Le couvercle 32 est ici fixé indirectement au carter 12 du graisseur, c'est-à-dire par l'intermédiaire d'une bague de serrage 50 qui vient se visser sur le carter 12. Ainsi, aucun mouvement de rotation du couvercle 32 n'est nécessaire lors du montage du couvercle 32 sur le carter 12. On peut donc prévoir des reliefs d'indexation 56 en position angulaire du couvercle par rapport au carter. Le circuit électrique de commande 24 est quant à lui positionné sur un capot intérieur 58 de logement de l'actionneur et de la source électrique, ce capot comportant également un relief d'indexation en position angulaire 60 par rapport au carter et/ou au couvercle. Le circuit électrique de commande 24 peut donc être relié électriquement au circuit électrique de signalisation 28 par deux pattes ressorts 52 ou tout autre moyen de connexion axial.

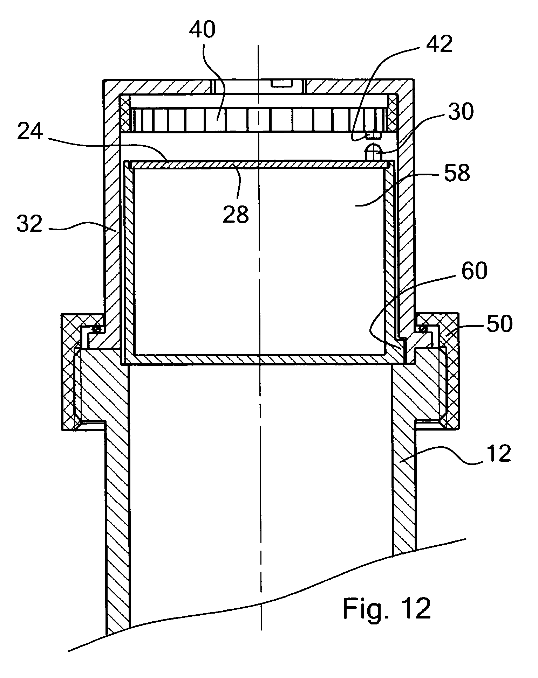

La figure 12 illustre une variante mettant également en oeuvre une bague 50 vissée sur le carter 12 et venant pincer le couvercle 32. Suivant cette variante, le circuit électrique de commande 24 et le circuit électrique de signalisation 28 sont intégrés sur une même plaque support située en partie haute d'un capot 58 recouvrant l'actionneur. Ce capot 58 est pourvu d'un relief d'indexation 60 par rapport au couvercle 32 et/ou au carter 12. Le diffuseur de lumière 40 est quant à lui fixé ou intégré au couvercle. Lors du montage, le couvercle 32 trouve immédiatement sa position de fonctionnement grâce aux reliefs d'indexation 60, 56, le serrage étant obtenu grâce à la bague de serrage 50 sans mouvement angulaire entre les pièces. Le positionnement correct de l'entrée de lumière 42 du diffuseur de lumière 40 par rapport à la source lumineuse 30 supportée par la plaque support est ainsi assuré.

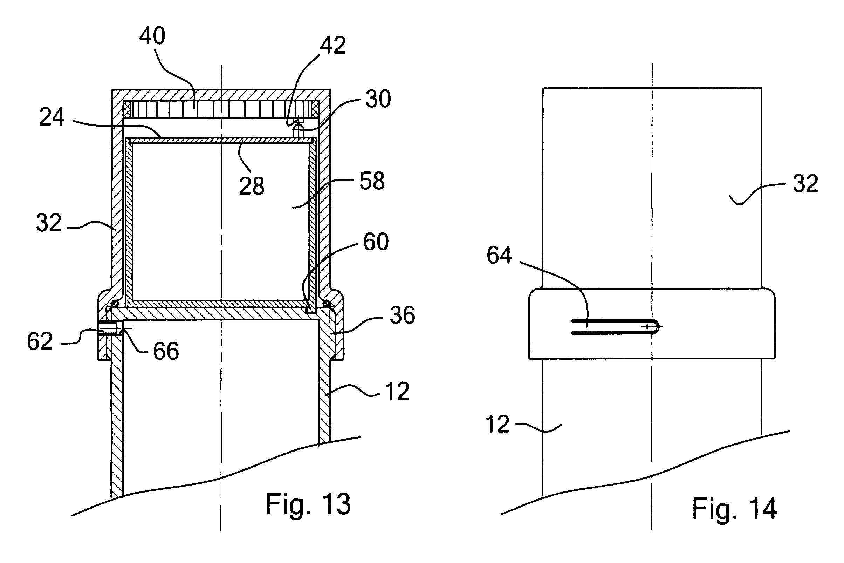

Les figures 13 et 14 illustrent une autre variante, qui présente comme la précédente une plaque support unique intégrant le circuit électrique de commande 24, le circuit électrique de signalisation 28 et sa source lumineuse 30. La plaque est située en partie haute d'un capot 58 recouvrant l'actionneur 19. Ce capot 58 est pourvu d'un relief d'indexation 60 par rapport au carter 12. Le diffuseur de lumière 40 est quant à lui fixé ou intégré au couvercle 32. Dans cette variante, le couvercle 32 est vissé sur un filetage extérieur 36 du carter 12. Pour assurer un positionnement correct de la source lumineuse 30 par rapport à l'entrée de lumière 42 du diffuseur de lumière 40 et un verrouillage dans cette position, le couvercle 32 est pourvu d'un ergot 62 à l'extrémité d'une lame élastique 64. Lorsque le couvercle 32 atteint la position souhaitée, l'ergot 62 pénètre dans un logement 66 du carter 12 et verrouille en position le couvercle 32 par rapport au carter 12. Il est possible de le désengager en déformant élastiquement la lame 64 à l'aide d'un outil.

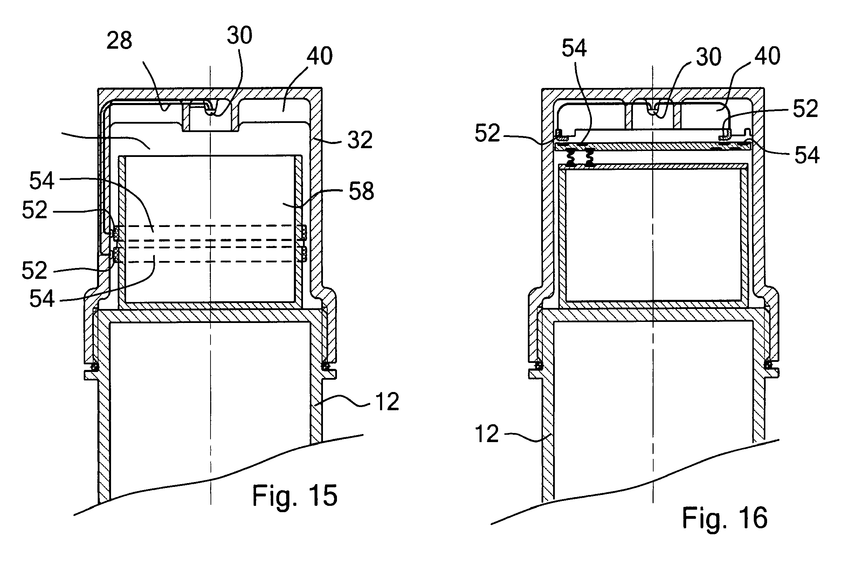

Sur la figure 15 est illustré un autre mode de réalisation, se caractérisant par une intégration de la source lumineuse 30 et du circuit électrique de signalisation 28 au couvercle 32. Le positionnement de la source lumineuse 30 peut être central ou déporté, et la forme du diffuseur de lumière 40 peut être quelconque. Le couvercle 32 est directement vissé sur le carter 12 et intègre deux conducteurs électriques pour relier la source lumineuse 30 à deux contacts élastiques radiaux 52 qui viennent au contact de deux pistes électriques annulaires 54 formées sur le pourtour d'un capot intermédiaire 58 recouvrant le circuit électrique de commande et l'actionneur électromécanique. Ainsi le contact électrique peut-il être assuré indépendamment du positionnement angulaire du couvercle 32 en fin de vissage. La source lumineuse 30 et le circuit électrique de signalisation 28 constitué par les conducteurs électriques peuvent être surmoulés dans le couvercle 32.

Selon une variante représentée sur la figure 16, l'alimentation électrique et de commande de la source électroluminescente peut être réalisée par des contacts élastiques 52 en appui axial contre deux pistes annulaires concentriques 54.

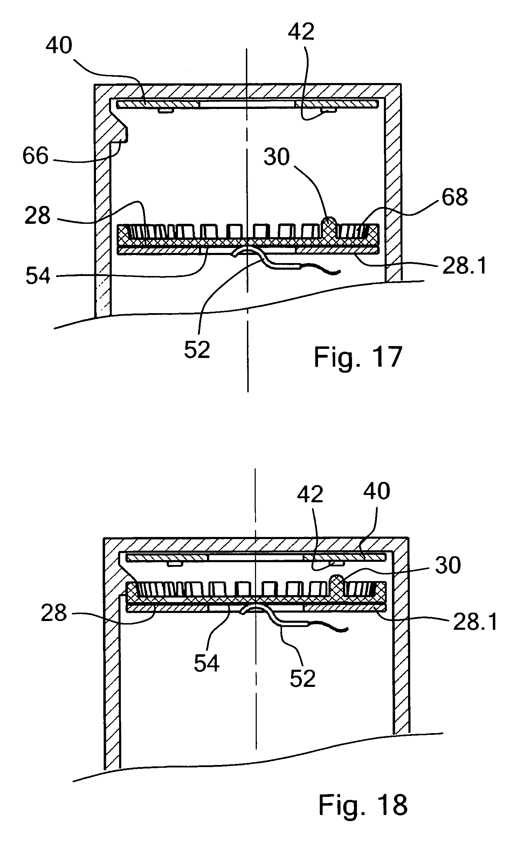

Selon un autre mode de réalisation, illustré par les figures 17 et 18, le circuit électrique de signalisation 28 qui porte la diode électroluminescente 30 constituant la source lumineuse est monté sur un plateau 28.1 libre en rotation par rapport au circuit électrique de commande 24. Le couvercle 32 intègre le diffuseur de lumière 40, dont l'entrée de lumière 42 doit être positionnée, lors d'une étape de prémontage, en regard de la source lumineuse 30. On prévoit pour ce faire des reliefs d'indexation 66, 68 entre le plateau de support du circuit électrique de signalisation et le couvercle. De préférence, les reliefs d'indexation sont constitués par une index 66 coopérant avec une couronne dentée. A l'assemblage, le monteur choisit la position du plateau 28 .1 qui met le mieux la source lumineuse 30 en regard de l'entrée de lumière 42 et solidarise le le plateau 28.1 au couvercle 32.. Le plateau 28.1 est pourvu de deux pistes de contact annulaires concentriques 54, qui viennent en appui contre deux lames métalliques élastiques 52 pour établir une liaison électrique entre le circuit électrique de signalisation 28 et le circuit électrique de commande 24.

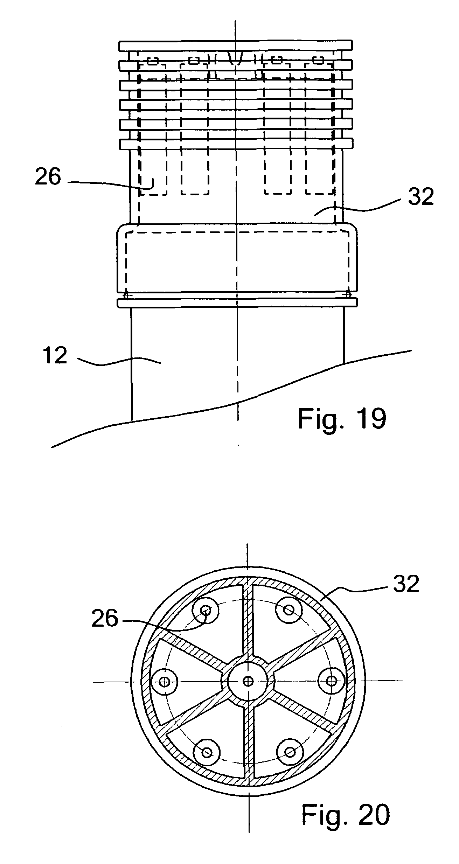

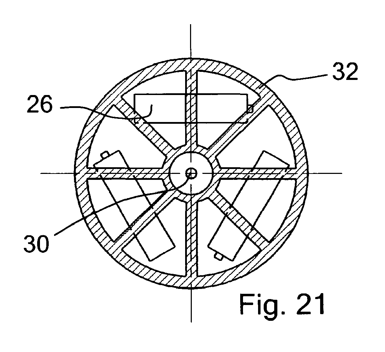

Selon un autre mode de réalisation, illustré par les figures 19 et 20, l'alimentation électrique 26 du circuit électrique de signalisation 28 est intégrée au couvercle 32. Il est sous-entendu ici que, comme dans les modes de réalisation des figures 15 et 16, la source lumineuse 30 est également fixe par rapport au couvercle 32. La source électrique 26 d'alimentation du circuit électrique de signalisation peut notamment être constituée par des piles ou accumulateurs cylindriques placés parallèlement à l'axe de référence, comme représenté sur les figures 19 et 20, ou couchés selon une variante représentée sur la figure 21. Il peut également s'agir de piles plates.

Dans la mesure où la source électrique du circuit de signalisation est indépendante de celle du circuit de commande, il est intéressant de ne pas avoir de connexion filaire entre le circuit électrique de commande de l'actionneur électromécanique et le circuit électrique de signalisation. La transmission des commandes du circuit électrique de commande au circuit électrique de signalisation peut être effectuée par tout mode de transmission sans fil, par exemple par radio-fréquence, induction ou signal optique.

Les modes de réalisation des figures 19 à 21 permettent de regrouper la fonction de signalisation dans un sous-ensemble autonome intégré au couvercle.

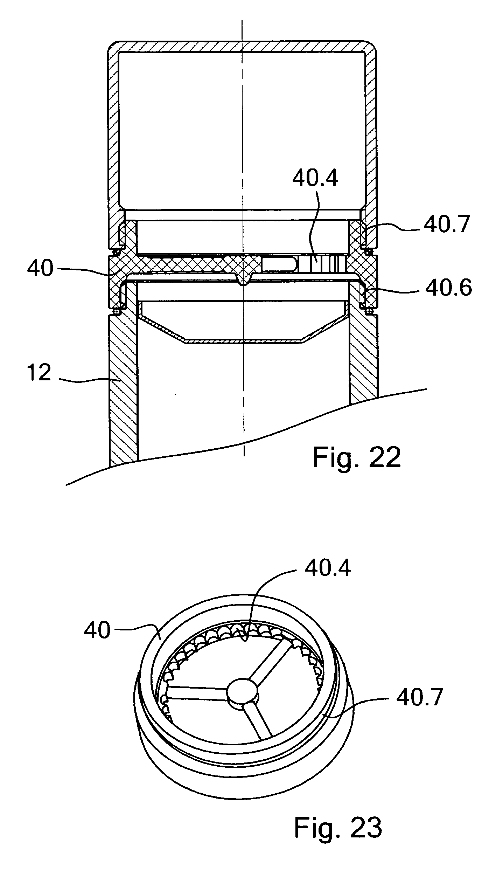

Selon un autre mode de réalisation illustré sur les figures 22 et 23, le diffuseur de lumière 40 est constitué par une bague à deux filetages 40.6, 40.7, positionnée entre le couvercle 32 et le carter 12. Le diffuseur de lumière 40 est vissé sur le carter, avec interposition le cas échéant d'un joint d'étanchéité, le couvercle étant quant à lui vissé sur le diffuseur de lumière, également avec interposition d'un joint d'étanchéité. On peut ainsi visser et dévisser le couvercle sans risque changer le positionnement du diffuseur de lumière 40. Le couvercle peut par ailleurs être opaque, puisqu'il n'a plus de fonction optique. La source d'énergie et l'actionneur (non représentés) sont alors logés dans le couvercle. De préférence, l'actionneur est de type électrochimique, et le logement étanche défini par le couvercle est en communication directe avec le piston 14. L'activation de l'actionneur électrochimique provoque dans le logement une surpession qui a pour effet d'actionner le piston.

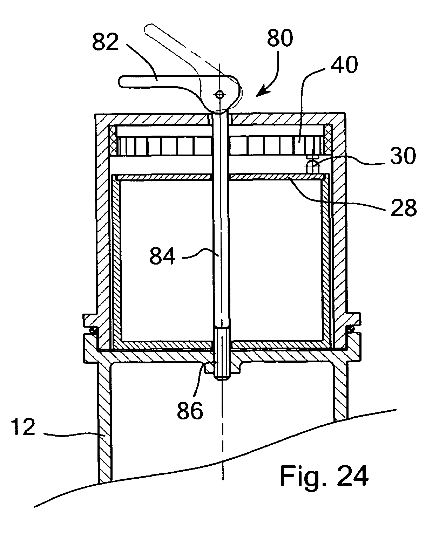

Suivant un autre mode de réalisation illustré sur la figure 24, on s'affranchit de tout mouvement de vissage du couvercle 32 par rapport au carter 12 en prévoyant un organe de verrouillage 80 constitué par un levier à came 82 articulé à l'extrémité d'une tige 84 fixée de façon amovible au carter 12 et traversant le fond du couvercle 32. Pour monter le couvercle 32, on place celui-ci dans la position souhaitée par rapport au carter 12, puis on fait pénétrer la tige 84 de l'organe de serrage 80 au travers du couvercle 32 pour la visser dans un trou fileté 86 solidaire du carter 12, avant de manoeuvrer le levier à came pout pincer le couvercle 32 en appui contre le carter 12.

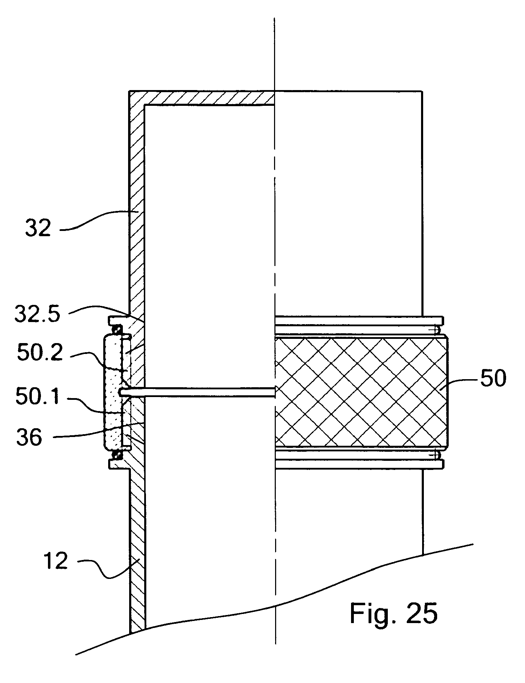

Selon le mode de réalisation de la figure 25, on prévoit une bague de fixation 50 à deux filetages inversés 50.1, 50.2, pour coopérer d'une part avec le filetage 36 du carter 12 et d'autre part avec le filetage 32.5 du couvercle. On prévoit par ailleurs un guidage d'indexation entre le couvercle et le carter, pour empêcher la rotation du couvercle par rapport au carter. Pour le montage, on dispose la bague entre le couvercle et le carter, on engage le coulisseau dans la glissière de guidage puis on tourne la bague, de sorte que les filets s'engagent simultanément pour visser les trois pièces.

Dans l'ensemble des modes de réalisation présentés, on peut prévoir d'activer le circuit de signalisation pour émettre un signal lumineux spécifique lorsque, lors du montage, le couvercle atteint sa position finale. Il peut s'agir par exemple d'une séquence brève de clignotements, qui atteste du bon déroulement d'une séquence de tests initiés par le circuit de commande.

D'autres variantes peuvent être envisagées. La source lumineuse intégrée au circuit électrique de signalisation peut utiliser tout moyen d'émission de lumière à partir d'une source électrique. L'axe de référence A du couvercle 32, qui correspond en pratique à un axe de montage du couvercle (par exemple par vissage) sur le carter 12, peut être distinct de l'axe de déplacement du piston 14.

L'actionneur peut être un moteur électrique ou un actionneur électrochimique émettant un gaz sous pression venant déplacer le piston. Le piston lui-même peut être rigide ou constitué par une poche gonflable.

Le couvercle peut être complètement transparent ou comporter des sorties de lumière individualisées et distribuées sur sa circonférence.

Les circuits électriques de commande et de signalisation peuvent ne pas être portés par des plaques de circuit imprimé rigides.

## Revendications

1. Graisseur (10) comportant :
- un récipient (12) à volume variable pour contenir un lubrifiant, le récipient étant pourvu d'au moins un orifice (18) d'évacuation du lubrifiant ;
- un actionneur (19) électromécanique ou électrochimique pour contracter le volume du récipient ;
- un circuit électrique de commande (24) de l'actionneur ;
- un circuit électrique de signalisation (28) de l'état du graisseur, comportant une source lumineuse (30), pour émettre au moins un signal lumineux d'alarme,
- un couvercle (32) fixé de façon amovible au récipient (12) de façon à constituer un logement (34) pour le circuit électrique de signalisation (28), le couvercle définissant un axe géométrique de référence (A) du graisseur,
**caractérisé en ce que** le graisseur comporte en outre :
- un diffuseur de lumière (40) pour guider la lumière émanant de la source lumineuse (30) vers une pluralité de sorties de lumière (46) réparties sur le pourtour du couvercle de manière qu'au moins une des sorties de lumière soit visible quelle que soit la position d'un observateur tourné vers le graisseur et situé sur un cercle d'observation centré sur l'axe de référence (A) du graisseur.

2. Graisseur selon la revendication 1, **caractérisé en ce que** le diffuseur de lumière (40) comporte une entrée de lumière (42) disposée en regard de la source lumineuse, et au moins un guide de lumière (44) pour distribuer la lumière vers les sorties de lumière (46).

3. Graisseur selon la revendication 2, **caractérisé en ce que** le guide de lumière (44) impose à la lumière une trajectoire dont une partie est en arc de cercle autour de l'axe de référence (A).

4. Graisseur selon l'une quelconque des revendications 2 à 3, **caractérisé en ce que** le guide de lumière (44) impose à la lumière une trajectoire partiellement radiale par rapport à l'axe de référence.

5. Graisseur selon l'une quelconque des revendications précédentes, **caractérisé en ce que** le couvercle (32) est vissé par rapport au récipient dans l'axe de référence.

6. Graisseur selon l'une quelconque des revendications précédentes, **caractérisé en ce que** le diffuseur de lumière (40) est logé à l'intérieur du couvercle (32) le couvercle étant transparent au moins au niveau des sorties de lumière (46).

7. Graisseur selon l'une quelconque des revendications précédentes, **caractérisé en ce que** le circuit électrique de commande (24) comporte une plaque de circuit imprimé de commande, le circuit électrique de signalisation (28) comporte une plaque de circuit imprimé de signalisation distincte de la plaque de circuit imprimé de commande qui est reliée électriquement à la plaque de circuit imprimé de commande par au moins une interface de connexion électrique comportant un contact électrique (54) relié au circuit électrique de signalisation et un connecteur (52) électrique correspondant relié au circuit électrique de commande.

8. Graisseur selon la revendication précédente, **caractérisé en ce que** l'un au moins des connecteurs électriques (52, 54) comporte une piste de contact en arc de cercle autour de l'axe de référence.

9. Graisseur selon l'une quelconque des revendications 7 ou 8, **caractérisé en ce que** l'un au moins des connecteurs (52, 54) est élastiquement déformable.

10. Graisseur selon l'une quelconque des revendications 7 à 9, **caractérisé en ce que** le circuit électrique de signalisation (28) est fixé au couvercle (32).

11. Graisseur selon l'une quelconque des revendications 7 à 9, **caractérisé en ce que** le circuit électrique de signalisation (28) est monté sur un plateau (28.1) logé dans le couvercle et indexé en rotation par rapport au diffuseur de lumière (40).

12. Graisseur selon l'une quelconque des revendications 1 ou 2, **caractérisé en ce que** le circuit électrique de signalisation (28) est solidaire de l'actionneur électromécanique (19).

13. Graisseur selon la revendication 12, **caractérisé en ce que** le circuit électrique de commande (24) et le circuit électrique de signalisation (28) sont disposés sur une plaque de circuit imprimé commune, solidaire de l'actionneur électromécanique (19).

14. Graisseur selon l'une quelconque des revendications 12 ou 13, **caractérisé en ce que** la source lumineuse (30) est centrée sur l'axe de référence (A), le diffuseur de lumière (40) étant solidaire du couvercle (32) et présentant une entrée de lumière (42) disposée en regard de la source lumineuse (30).

15. Graisseur selon l'une quelconque des revendications 12 ou 13, **caractérisé en ce que** la source lumineuse (30) est décalée par rapport à l'axe de référence (A), le diffuseur de lumière (40) étant, par rapport au couvercle (32), fixe en translation axiale et libre en rotation autour de l'axe de référence (A), le diffuseur de lumière (40) étant pourvu d'un relief d'indexation angulaire (66, 68) pour positionner le diffuseur par rapport à la source lumineuse.

16. Graisseur selon l'une quelconque des revendications 1 à 15, **caractérisé en ce que** le diffuseur de lumière (40) est partie intégrale du couvercle (32).

17. Graisseur selon la revendication 16, **caractérisé en ce que** le graisseur comporte en outre un organe de fixation (80) du couvercle (32) au récipient (12), sans rotation du couvercle (32) par rapport au récipient (12) autour de l'axe géométrique de référence.

18. Graisseur selon la revendication 17, **caractérisé en ce que** l'organe de fixation comporte une bague (50) intermédiaire de fixation, présentant un premier filetage intermédiaire (50.1) coopérant avec un filetage du couvercle et un deuxième filetage intermédiaire (50.2) coopérant avec un filetage de l'actionneur électromécanique, le premier filetage intermédiaire et le deuxième filetage intermédiaire ayant des pas inversés.

19. Graisseur selon la revendication 17, **caractérisé en ce que** l'organe de fixation comporte :
- une bague de fixation (50) pourvue d'une interface de fixation à baïonnette ou à vis pour fixer la bague à l'actionneur électromécanique par rotation de la bague par rapport à l'actionneur électromécanique autour de l'axe de référence, et d'un épaulement de pincement du couvercle sur l'actionneur électromécanique,
- un relief d'indexation angulaire (56) du couvercle par rapport à l'actionneur électromécanique.

20. Graisseur selon la revendication 17, **caractérisé en ce que** l'organe de fixation comporte un levier à came (80).

21. Graisseur selon l'une quelconque des revendications 1 à 15, **caractérisé en ce que** le diffuseur de lumière est pourvu d'un relief d'indexation angulaire par rapport à l'actionneur électromécanique, d'une interface de fixation par rapport à l'actionneur électromécanique, et d'une interface de fixation par rapport au couvercle.

22. Graisseur selon l'une quelconque des revendications précédentes, **caractérisé en ce que** le circuit électrique de signalisation est alimenté électriquement par une source électrochimique autonome (26), solidaire du couvercle.

## Patentansprüche

1. Schmiervorrichtung (10), umfassend:
- einen Schmiermittelbehälter (12) mit wechselndem Volumen, wobei der Behälter zumindest mit einer Öffnung (18) zum Ausbringen des Schmiermittels versehen ist;
- einen elektromechanischen oder elektrochemischen Steller (19) zum Zusammenziehen des Behältervolumens;
- einen Stromkreis (24) zum Steuern des Stellers;
- einen Stromkreis (28) zum Melden des Zustands der Schmiervorrichtung umfassend eine Leuchtquelle (30) zum Aussenden zumindest eines Alarmleuchtsignals;
- eine Abdeckung (32), die abnehmbar auf dem Behälter (12) befestigt ist, um eine Aufnahme (34) für den Meldestromkreis (28) zu bilden, wobei die Abdeckung eine geometrische Bezugsachse (A) der Schmiervorrichtung bestimmt,
**dadurch gekennzeichnet, dass** die Schmiervorrichtung darüber hinaus folgendes umfasst:
- einen Lichtdiffusor (40) zum Leiten des Lichts, das aus der Leuchtquelle (30) ausgestrahlt wird, in Richtung mehrerer Lichtauslässe (46), die über die Umrandung der Abdeckung verteilt sind, sodass zumindest einer der Lichtauslässe unabhängig davon sichtbar ist, in welcher Position sich ein Beobachter befindet, der sich in Richtung der Schmiervorrichtung wendet, und sich auf einem Beobachtungskreis befindet, der auf der Bezugsachse (A) der Schmiervorrichtung zentriert ist.

2. Schmiervorrichtung nach Anspruch 1, **dadurch gekennzeichnet, dass** der Lichtdiffusor (40) einen Lichteinlass (42) umfasst, der gegenüber der Leuchtquelle angeordnet ist, und zumindest eine Lichtführung (44) zum Verteilen des Lichtes in Richtung der Lichtauslässe (46).

3. Schmiervorrichtung nach Anspruch 2, **dadurch gekennzeichnet, dass** die Lichtführung (44) dem Licht eine Bahn auferlegt, von der ein Teil im Kreisbogen um die Bezugsachse (A) verläuft.

4. Schmiervorrichtung nach irgendeinem der Ansprüche 2 bis 3, **dadurch gekennzeichnet, dass** die Lichtführung (44) dem Licht eine Bahn auferlegt, die im Verhältnis zur Bezugsachse teilweise radial verläuft.

5. Schmiervorrichtung nach irgendeinem der vorherigen Ansprüche, **dadurch gekennzeichnet, dass** die Abdeckung (32) im Verhältnis zum Behälter in der Bezugsachse verschraubt ist.

6. Schmiervorrichtung nach irgendeinem der vorherigen Ansprüche, **dadurch gekennzeichnet, dass** der Lichtdiffusor (40) im Inneren der Abdeckung (32) angeordnet ist, wobei die Abdeckung zumindest im Bereich der Lichtauslässe (46) durchscheinend ist.

7. Schmiervorrichtung nach irgendeinem der vorherigen Ansprüche, **dadurch gekennzeichnet, dass** der Steuerstromkreis (24) eine Steuerleiterplatte umfasst, der Meldestromkreis (28) eine Meldeleiterplatte umfasst, die sich von der Steuerleiterplatte unterscheidet, und elektrisch zumindest über eine elektrische Schnittstelle mit der Steuerleiterplatte verbunden ist, die einen Stromkontakt (54) umfasst, der mit dem Meldestromkreis verbunden ist, und eine entsprechende elektrische Steckverbindung (52), die mit dem Steuerstromkreis verbunden ist.

8. Schmiervorrichtung nach dem vorherigen Anspruch, **dadurch gekennzeichnet, dass** zumindest eine der elektrischen Steckverbindungen (52, 54) eine Kontaktstrecke im Kreisbogen um die Bezugsachse umfasst.

9. Schmiervorrichtung nach irgendeinem der Ansprüche 7 oder 8, **dadurch gekennzeichnet, dass** zumindest eine der elektrischen Steckverbindungen (52, 54) elastisch verformbar ist.

10. Schmiervorrichtung nach irgendeinem der Ansprüche 7 bis 9, **dadurch gekennzeichnet, dass** der Meldestromkreis (28) auf der Abdeckung (32) befestigt ist.

11. Schmiervorrichtung nach irgendeinem der Ansprüche 7 bis 9, **dadurch gekennzeichnet, dass** der Meldestromkreis (28) auf einer Platte (28.1) montiert ist, die in der Abdeckung angeordnet, und im Verhältnis zum Lichtdiffusor (40) drehend indexiert ist.

12. Schmiervorrichtung nach irgendeinem der Ansprüche 1 oder 2, **dadurch gekennzeichnet, dass** der Meldestromkreis (28) fest mit dem elektromechanischen Steller (19) verbunden ist.

13. Schmiervorrichtung nach Anspruch 12, **dadurch gekennzeichnet, dass** der Steuerstromkreis (24) und der Meldestromkreis (28) auf einer gemeinsamen Leiterplatte angeordnet sind, die fest mit dem elektromechanischen Steller (19) verbunden ist.

14. Schmiervorrichtung nach irgendeinem der Ansprüche 12 oder 13, **dadurch gekennzeichnet, dass** die Leuchtquelle (30) auf der Bezugsachse (A) zentriert ist, wobei der Lichtdiffusor (40) fest mit der Abdeckung (32) verbunden ist, und einen Lichteinlass (42) aufweist, der gegenüber der Leuchtquelle (30) angeordnet ist.

15. Schmiervorrichtung nach irgendeinem der Ansprüche 12 oder 13, **dadurch gekennzeichnet, dass** die Leuchtquelle (30) im Verhältnis zur Bezugsachse (A) versetzt ist, wobei der Lichtdiffusor (40) im Verhältnis zur Abdeckung (32) im axialen Vorschub fest, und in der Rotation um die Bezugsachse (A) frei ist, und der Lichtdiffusor (40) mit einem Winkelindexier-Relief (66, 68) versehen ist, um den Diffusor im Verhältnis zur Leuchtquelle zu positionieren.

16. Schmiervorrichtung nach irgendeinem der Ansprüche 1 bis 15, **dadurch gekennzeichnet, dass** der Lichtdiffusor (40) fester Bestandteil der Abdeckung (32) ist.

17. Schmiervorrichtung nach Anspruch 16, **dadurch gekennzeichnet, dass** die Schmiervorrichtung darüber hinaus eine Vorrichtung zur Befestigung (80) der Abdeckung (32) auf dem Behälter (12) umfasst, ohne Drehung der Abdeckung (32) im Verhältnis zum Behälter (12) um die geometrische Bezugsachse.

18. Schmiervorrichtung nach Anspruch 17, **dadurch gekennzeichnet, dass** die Befestigungsvorrichtung einen Zwischenring (50) zur Befestigung umfasst, der ein erstes Zwischengewinde (50.1) aufweist, das mit einem Gewinde der Abdeckung zusammenwirkt, sowie ein zweites Zwischengewinde (50.2), das mit einem Gewinde des elektromechanischen Stellers zusammenwirkt, und das erste Zwischengewinde und das zweite Zwischengewinde seitenverkehrte Gewindesteigungen aufweisen.

19. Schmiervorrichtung nach Anspruch 17, **dadurch gekennzeichnet, dass** die Befestigungsvorrichtung folgendes umfasst:
- einen Befestigungsring (50) mit einer Befestigungsschnittstelle in Form eines Bajonett- oder Schraubverschlusses zum Befestigen des Ringes auf dem elektromechanischen Steller durch das Verdrehen des Ringes im Verhältnis zum elektromechanischen Steller um die Bezugsachse, und ein Ansatzstück zum Klemmen der Abdeckung auf dem elektromechanischen Steller,
- ein Relief zur Winkelindexierung (56) der Abdeckung im Verhältnis zum elektromechanischen Steller.

20. Schmiervorrichtung nach Anspruch 17, **dadurch gekennzeichnet, dass** die Befestigungsvorrichtung einen Nockenhebel (80) umfasst.

21. Schmiervorrichtung nach irgendeinem der Ansprüche 1 bis 15, **dadurch gekennzeichnet, dass** der Lichtdiffusor mit einem Relief zur Winkelindexierung im Verhältnis zum elektromechanischen Steller, mit einer Befestigungsschnittstelle im Verhältnis zum elektromechanischen Steller und einer Befestigungsschnittstelle im Verhältnis zur Abdeckung versehen ist.

22. Schmiervorrichtung nach irgendeinem der vorherigen Ansprüche, **dadurch gekennzeichnet, dass** der Meldestromkreis durch eine autonome elektrochemische Quelle (26) mit Strom versorgt wird, die fest mit der Abdeckung verbunden ist.

## Claims

1. Lubricator (10) comprising
- a variable-volume container (12) containing a lubricant, the container provided with at least one orifice (18) for discharging the lubricant;
- an electromechanical or electrochemical actuator (19) to contract the volume of the container;
- an electric circuit (24) for controlling the actuator;
- a lubricator state signalling electric circuit (28), comprising a light source (30), to transmit at least one alarm signal light,
- a cover (32) fixed in a removable manner to the container (12) in such a way as to constitute a housing (34) for the signalling electric circuit (28), with the cover defining a geometric reference axis (A) of the lubricator,
**characterised in that** the lubricator further comprises:
- a light diffuser (40) to guide the light emanating from the light source (30) to a plurality of light outputs (46) distributed on the circumference of the cover in such a way that at least one of the light outputs is visible irrespective of the position of an observer turned towards the lubricator and located on a circle of observation centred on the reference axis (A) of the lubricator.

2. Lubricator according to claim 1, **characterised in that** the light diffuser (40) comprises a light input (42) arranged opposite the light source, and at least one light guide (44) in order to distribute the light to the light outputs (46).

3. Lubricator according to claim 2, **characterised in that** the light guide (44) imposes upon the light a trajectory of which a portion is arcuated around the reference axis (A).

4. Lubricator according to any of claims 2 to 3, **characterised in that** the light guide (44) imposes upon the light a trajectory that is partially radial in relation to the reference axis.

5. Lubricator as claimed in any preceding claim, **characterised in that** the cover (32) is screwed in relation to the container in the reference axis.

6. Lubricator as claimed in any preceding claim, **characterised in that** the light diffuser (40) is housed inside the cover (32), with the cover being transparent at least on light outputs (46).

7. Lubricator as claimed in any preceding claim, **characterised in that** the electric control circuit (24) comprises a printed control circuit board, the signalling electric circuit (28) comprises a signally printed circuit board separate from the printed control circuit board which is electrically connected to the printed control circuit board by at least one electrical interface connection comprising an electric contact (54) connected to the signalling electric circuit and a corresponding electric connector (52) connected to the electric control circuit.

8. Lubricator as claimed in the preceding claim, **characterised in that** at least one of the electric connectors (52, 54) comprises a contact path in arcuated around the reference axis.

9. Lubricator according to any of claims 7 or 8, **characterised in that** at least one of the connectors (52, 54) is elastically deformable.

10. Lubricator according to any of claims 7 to 9, **characterised in that** the signalling electric circuit (28) is fixed to the cover (32).

11. Lubricator according to any of claims 7 to 9, **characterised in that** the signalling electric circuit (28) is mounted on a plate (28.1) housed in the cover and indexed in rotation relative to the light diffuser (40).

12. Lubricator according to any of claims 1 or 2, **characterised in that** the signalling electric circuit (28) is integral with the electromechanical actuator (19).

13. Lubricator according to claim 12, **characterised in that** the electric control circuit (24) and the signalling electric circuit (28) are arranged on a shared printed circuit board, integral with the electromechanical actuator (19).

14. Lubricator according to any of claims 12 or 13, **characterised in that** the light source (30) is centred on the reference axis (A), with the light diffuser (40) being integral with the cover (32) and having a light input (42) arranged opposite the light source (30).

15. Lubricator according to any of claims 12 or 13, **characterised in that** the light source (30) is offset in relation to the reference axis (A), with the light diffuser (40) being, relative to the cover (32), fixed in axial translation and free in rotation around the reference axis (A), with the light diffuser (40) being provided with an angular relief indexing (66, 68) in order to position the diffuser relative to the light source.

16. Lubricator according to any of claims 1 to 15, **characterised in that** the light diffuser (40) is an integral part of the cover (32).

17. Lubricator according to claim 16, **characterised in that** the lubricator further comprises a fastening member (80) of the cover (32) to the container (12), without rotation of the cover (32) in relation to the container (12) around the geometric reference axis.

18. Lubricator according to claim 17, **characterised in that** the fastening member comprises an intermediate fastening ring (50), having a first intermediary threading (50.1) cooperating with a threading of the cover and a second intermediary threading (50.2) cooperating with a threading of the electromechanical actuator, with the first intermediary threading and the second intermediary threading having inverted pitches.

19. Lubricator according to claim 17, **characterised in that** the fastening member comprises:
- a fastening ring (50) provided with an interface with a bayonet fitting or with a screw fitting in order to fasten the ring to the electromechanical actuator by rotation of the ring in relation to the electromechanical actuator around the reference axis, and with a lip for pinching the cover on the electromechanical actuator,
- an angular relief indexing (56) of the cover in relation to the electromechanical actuator.

20. Lubricator according to claim 17, **characterised in that** the fastening member comprises a cam lever (80).

21. Lubricator according to any of claims 1 to 15, **characterised in that** the light diffuser is provided with an angular relief indexing relative to the electromechanical actuator, with a fastening interface relative to the electromechanical actuator, and with a fastening interface relative to the cover.

22. Lubricator as claimed in any preceding claim, **characterised in that** the signalling electric circuit is powered electrically by a standalone electrochemical source (26), integral with the cover.
